# FASCICULE DE BREVET EUROPEEN

(11) **EP 0 581 640 B1**
(45) Date de publication et mention de la délivrance du brevet: **15.04.1998**
(21) Numéro de dépôt: 93401860.7
(22) Date de dépôt: 19.07.1993
(51) Int. Cl.: B29C 45/60, B29C 45/50

(54) **Procédé vis sans fin et presse pour l'injection de charges successives de matière plastique à mouler**
Verfahren, Schnecke und Presse zum Spritzgiessen von aufeinanderfolgenden Kunststoffladungen
Method, screw and press for injecting successive charges of plastic moulding material

(30) Priorité: 20.07.1992 FR 9208935
(43) Date de publication de la demande: 02.02.1994
(73) Titulaire: BILLION S.A., F-01810 Bellignat (FR)
(72) Inventeur: Perrin, Jean-Pierre, F-01100 Oyonnax (FR)
(74) Mandataire: Jacobson, Claude

(56) Documents cités:
- EP-A- 0 059 408
- WO-A-81/02407
- US-A- 2 487 426
- US-A- 3 689 184
- US-A- 4 306 848
- PATENT ABSTRACTS OF JAPAN vol. 13, no. 100 (M-805)(3448) 9 March 1989 & JP-A-63 288 725 (UBE)

## Description

La présente invention est relative à un procédé d'injection de charges successives de matière plastique à mouler, du type décrit dans le préambule de la revendication 1.

La technique d'injection des matières plastiques au moyen d'une vis sans fin est avantageuse de par la précision du dosage de chaque charge et de l'injection, et de par le débit élevé de matière qu'elle permet, conduisant à un rendement élevé du procédé.

Cependant, les vis sans fin classiques, qui sont filetées sur toute leur longueur pour assurer l'avance de la charge, sa compression et son homogénéisation en température, ne permettent pas de réaliser certains types de moulages, notamment le moulage de pièces jaspées, réalisées à partir d'un mélange de matières plastiques de couleurs et de duretés différentes, et le moulage de matières plastiques renforcées de fibres longues. En effet, dans le premier cas, on observe une dispersion des couleurs les unes dans les autres, tandis que, dans le second cas, il se produit une rupture excessive des fibres.

Le WO-A-81/02407 décrit un procédé d'injection du type indiqué plus haut. Cependant, la configuration de l'ensemble à vis et le mode opératoire rendent ce procédé connu inapte au moulage de pièces jaspées et de matières plastiques renforcées de fibres longues.

C'est pourquoi, dans la technique actuelle, on utilise des appareils à pot de fusion, à faible rendement, pour réaliser de tels moulages.

L'invention a pour but de rendre possible le moulage de pièces jaspées et de matières plastiques renforcées de fibres longues au moyen d'un appareil à vis sans fin.

A cet effet, l'invention a pour objet un procédé du type précité, caractérisé par la partie caractérisante de la revendication 1.

D'autres caractéristiques sont décrites dans les sous-revendications 2 à 5.

L'invention a également pour objet un ensemble à vis sans fin destiné à la mise en oeuvre d'un tel procédé. Cet ensemble à vis sans fin, du type décrit dans le préambule de la revendication 6, est caractérisé par la partie caractérisante de cette revendication 6.

D'autres caractéristiques de cet ensemble à vis sans fin sont décrites dans les sous-revendications 7 à 10.

L'invention a encore pour objet une presse d'injection de charges successives de matière plastique à mouler, comprenant un fourreau muni dans sa partie arrière d'une alimentation unique en matière plastique, et un ensemble à vis sans fin tel que défini ci-dessus, monté rotatif et coulissant dans ce fourreau, ladite alimentation unique débouchant au droit de ladite partie arrière dudit ensemble. Un exemple de mise en oeuvre de l'invention va maintenant être décrit en regard des dessins annexés, sur lesquels :
- la Figure 1 représente en élévation, avec coupe longitudinale partielle, un ensemble à vis sans fin conforme à l'invention;
- la Figure 2 représente en coupe longitudinale une presse d'injection de matière plastique équipée de l'ensemble à vis sans fin de la Figure 1; et
- les Figures 3 et 4 illustrent, partiellement en coupe longitudinale, et à plus grande échelle, l'injection d'une charge de matière plastique au moyen de cette presse.

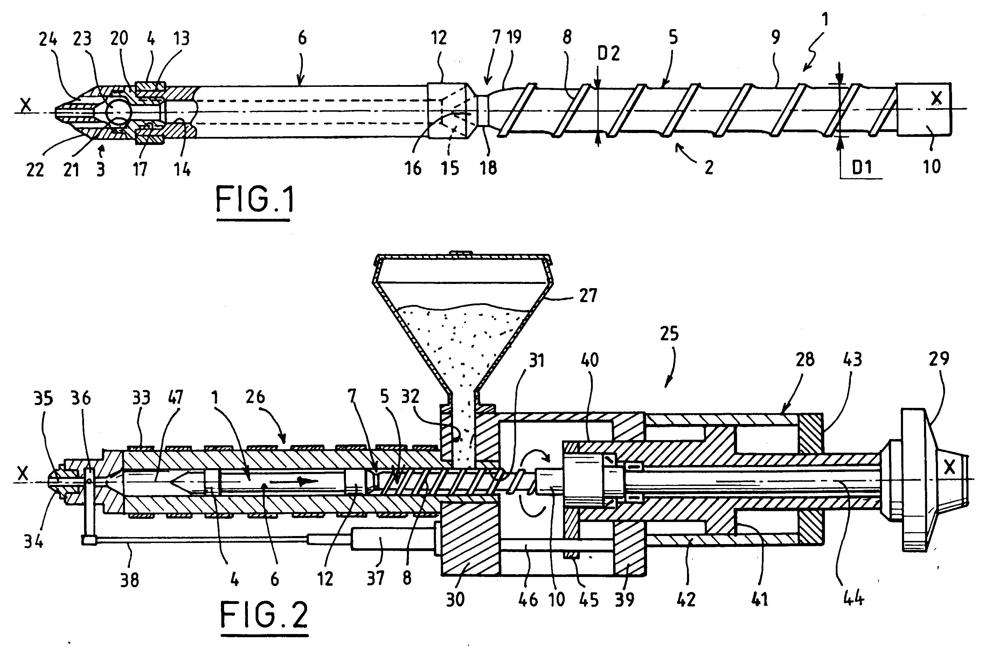

L'ensemble à vis sans fin 1 représenté à la Figure 1, d'axe X-X horizontal, est constitué d'un corps principal 2, réalisé d'une seule pièce, d'un embout composite 3 rapporté sur l'extrémité avant de ce corps et formant clapet anti-retour, et d'un palier avant 4 également rapporté sur le corps 2.

Le corps 2 comprend une partie arrière 5 et une partie avant 6 à peu près de même longueur, et une zone intermédiaire 7, considérablement plus courte, qui les relie.

La partie arrière 5, qui est pleine, est munie d'un filet de vis 8 de diamètre extérieur D1, avec, entre les spires, un fond de filet 9 de diamètre constant D2. L'extrémité arrière de cette partie 5 forme un embout d'entraînement 10.

La partie avant 6 est extérieurement cylindrique, de diamètre extérieur légèrement inférieur à D1. Ce diamètre extérieur est ramené à D1 sur une courte longueur, à l'extrémité arrière de la partie 6, pour former un palier arrière 12, et il est légèrement réduit sur une longueur analogue à l'extrémité avant de la partie 6, pour former un lamage 13. Sur ce dernier est enfilée sans jeu une bague, de même longueur et de diamètre extérieur D1, qui constitue le palier avant 4.

Intérieurement, la partie 6 comporte sur l'essentiel de sa longueur un unique conduit axial 14 de diamètre constant. De l'extrémité arrière de ce conduit, située au droit du palier 12, partent vers l'arrière une série d'orifices divergents 15, lesquels débouchent sur une face d'extrémité arrière tronconique 16 de la partie 6. La partie d'extrémité avant 17 du conduit 14 est contre-alésée et taraudée.

La zone intermédiaire 7 de l'ensemble 1 est pleine et comporte une partie avant cylindrique 18, de diamètre inférieur à D2, qui se raccorde à la petite base de la face tronconique 16 et, par conséquent, autour de laquelle débouchent les orifices 15. Cette partie 18 se prolonge vers l'arrière par une partie divergente 19, à profil méridien bombé, qui rejoint vers l'arrière le fond de filet, de diamètre D2, de la partie 5 de la vis.

L'embout 3, dont le diamètre extérieur est inférieur à D1, comporte une douille arrière 20 qui se visse dans le taraudage 17 et qui, au moyen d'un épaulement radial, maintient alors en place le palier 4 sur le lamage 13. Cette douille 20 définit un siège de bille 21 de forme tronconique divergent vers l'avant.

L'embout 3 comporte également un nez 22, extérieurement cylindro-tronconique, qui se visse sur la douille 20 et définit alors avec celle-ci une chambre à bille recevant librement une bille 23. Le nez 22 est percé de plusieurs conduits 24 parallèles à l'axe X-X et débouchant dans la chambre à bille.

La presse d'injection représentée sur la Figure 2 comprend essentiellement, outre l'ensemble 1, un bâti 25, un fourreau chauffant 26, une trémie d'alimentation 27, un vérin hydraulique 28, et un moto-réducteur 29 d'entraînement en rotation de l'ensemble 1. Cette presse est représentée schématiquement et ne sera décrite que dans la mesure nécessaire à la compréhension de l'invention, car elle ne diffère des presses à vis classiques que par la structure de l'ensemble 1, décrite plus haut. Le bâti 25 comporte une paroi avant verticale 30 dans laquelle est ménagé, coaxialement à l'axe X-X de la vis, un conduit avant 31 recevant une partie du filet 8. L'extrémité arrière du fourreau 26 est fixée contre la paroi 30 de façon que son conduit intérieur cylindrique, dans lequel coulissent sans jeu les paliers 4 et 12 et la partie avant du filet 8, prolonge vers l'avant le conduit 31. Dans la paroi 30 est également prévu un conduit vertical 32 qui communique avec la trémie 27 et débouche dans le conduit 31.

Le fourreau 26, muni de colliers chauffants 33, est équipé à son extrémité avant d'une buse d'injection 34 ayant un alésage axial 35 de diamètre réduit. Cet alésage de sortie de la presse peut être obturé ou ouvert au moyen d'un boisseau quart-de-tour 36 commandé par un vérin 37 par l'intermédiaire d'une tringlerie 38.

Le bâti 25 comporte par ailleurs une paroi arrière verticale 39 dans une ouverture de laquelle peut coulisser un corps de piston tubulaire 40. A l'arrière de la paroi 39, ce dernier s'élargit en une tête de piston 41 coulissant à joint étanche dans un corps de vérin 42 solidaire de la paroi 31.

Le corps de piston 40 se prolonge vers l'arrière, traverse à joint étanche la paroi arrière 43 du corps de vérin, et porte le moto-réducteur 29 au-delà de cette paroi. L'arbre de sortie 44 du moto-réducteur traverse librement le corps de piston 40 et est relié à l'embout arrière 10 de la vis, à l'avant de ce corps 40; ce dernier est guidé en translation par rapport au bâti 25, parallèlement à l'axe X-X. Un appendice radial 45, coulissant sur une colonne horizontale 46 qui relie les parois 30 et 39, assure la reprise du couple d'entraînement.

Le fonctionnement de la presse ainsi décrite est le suivant.

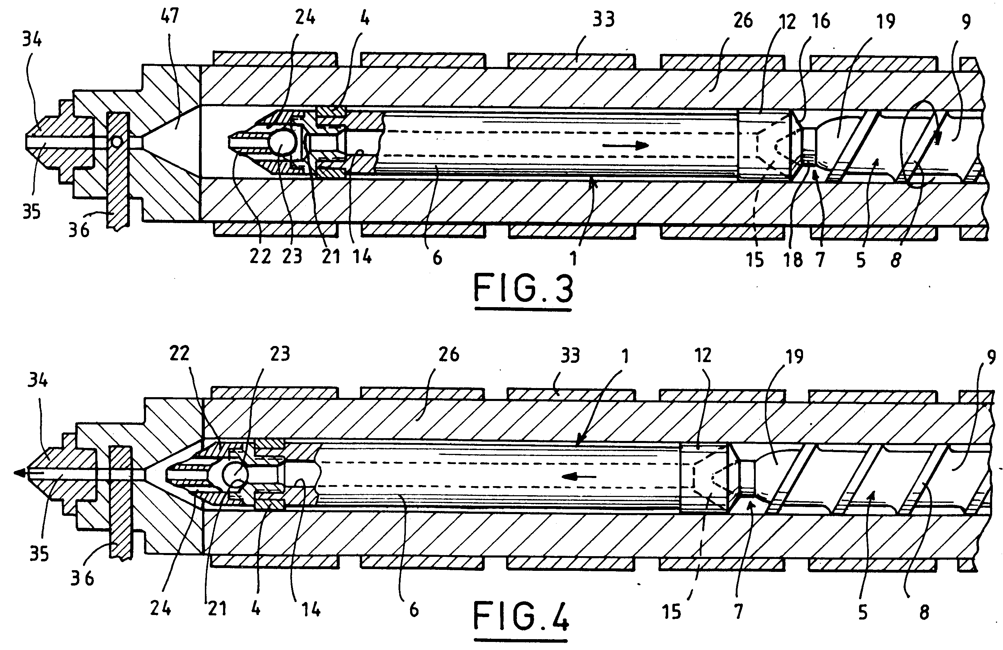

A la fin d'une phase d'injection d'une charge de matière plastique dans un moule (non représenté) accouplé à la buse 34, l'ensemble 1 se trouve dans sa position la plus avancée illustrée sur la Figure 4.

On ferme alors l'alésage de sortie 35 par rotation du boisseau 36, et on entraîne en rotation la vis au moyen du moto-réducteur 29, la chambre arrière du vérin 28 étant reliée à la bâche. La partie arrière de la vis provoque alors l'avance de la charge suivante de matière plastique, jusqu'à la zone intermédiaire 7, cette charge étant simultanément comprimée et chauffée. Dans la zone 7, la matière plastique est forcée dans les orifices 15 puis pénètre dans le conduit central 14, ou se produit une homogénéisation en température et la fusion complète des grains de matière plastique.

Il est à noter que la section de passage offerte à la matière plastique est sensiblement la même dans la partie 5 et dans la partie 6 de l'ensemble 1, et est agrandie dans la zone 7.

A l'extrémité avant du conduit 14, la matière plastique repousse la bille 23, pénètre dans le nez 22 puis, à travers les conduits 24 de celui-ci, arrive dans la chambre d'injection 47 délimitée dans le fourreau 26 à l'avant de l'ensemble à vis.

L'accumulation de matière plastique sous pression dans la chambre 47 développe une force agissant vers l'arrière sur la vis, ce qui provoque le recul progressif de celle-ci, comme indiqué par la flèche sur les Figures 2 et 3.

Lorsque la vis a reculé d'une distance prédéterminée, sa rotation est arrêtée, l'alésage 35 est ouvert au moyen du boisseau 36, et le vérin 28 est mis en action pour transférer dans le moule la charge accumulée dans la chambre 47, ce qui réalise l'injection proprement dite. Dès le début de cette avance de la vis, la bille 23 vient s'appliquer sur son siège 21 et isole ainsi la charge à transférer.

Grâce à la configuration de l'ensemble 1 décrite plus haut, la seconde partie de l'avance de la charge, pendant laquelle s'effectue l'homogénéisation en température, est réalisée sans action d'un filet de vis, suivant un trajet à peu près rectiligne des grains, et l'on constate que l'on peut ainsi mouler des pièces jaspées et/ou constituées de matière plastique renforcée par des fibres longues.

## Revendications

1. Procédé d'injection de charges successives de matière plastique à mouler, du type dans lequel, au moyen d'un ensemble (1) à vis sans fin comprenant une partie arrière filetée (5) reliée par une zone intermédiaire (7) à une partie avant (6) dans laquelle est défini au moins un conduit rectiligne interne (14), cet ensemble tournant et coulissant dans un fourreau (26) muni de moyens de chauffage (33) et définissant à l'avant de l'ensemble à vis une chambre d'injection (47), on fait avancer chaque charge de matière plastique à injecter, en la comprimant et en homogénéisant sa température, par rotation de la vis, et on l'introduit dans une chambre d'injection (47), l'accumulation de matière plastique dans la chambre d'injection provoquant le recul progressif de l'ensemble à vis, la chambre d'injection étant ensuite mise en communication avec un moule et l'ensemble à vis étant avancé pour transférer la charge dans le moule, le procédé comprenant les étapes suivantes :
- on confère à la zone intermédiaire(7) une section réduite;
- on alimente la matière plastique uniquement au droit de la partie arrière filetée (5);
- on fait tout d'abord avancer la charge au moyen de cette partie arrière filetée (5) jusqu'à ladite zone intermédiaire (7) à section réduite, puis
- on fait pénétrer la charge de l'espace entourant cette zone jusque dans ledit conduit rectiligne (14) défini dans la partie avant (6) dudit ensemble (1).

2. Procédé suivant la revendication 1, caractérisé en ce qu'on maintient une section de passage à peu près constante dans la partie arrière (5) et dans la partie avant (6) dudit ensemble (1), la section de passage dans la zone intermédiaire (7) étant au moins égale à cette section à peu près constante.

3. Procédé suivant la revendication 1 ou 2, caractérisé en ce que la longueur axiale du conduit rectiligne (14) est considérablement supérieure à celle de la zone intermédiaire (7).

4. Procédé suivant la revendication 1 ou 3, caractérisé en ce que la partie filetée (5) et le conduit rectiligne (14) ont à peu près la même longueur.

5. Procédé suivant l'une quelconque des revendications 1 à 4, caractérisé en ce que chaque charge comprend un mélange de matières plastiques de couleurs et de duretés différentes et/ou des fibres longues.

6. Ensemble à vis sans fin pour l'injection de charges successives de matière plastique à mouler, destiné à tourner et à coulisser dans un fourreau (26), du type comprenant une partie arrière filetée (5) qui ne s'étend que jusqu'à une zone intermédiaire (7) de la longueur dudit ensemble, la partie avant (6) de cet ensemble définissant un passage constitué par au moins un conduit rectiligne interne (14) et qui communique par son extrémité amont avec l'espace entourant ladite zone intermédiaire, ladite zone intermédiaire (7) présentant une section réduite.

7. Ensemble suivant la revendication 6, caractérisé en ce que la section de passage de la partie avant (6) est sensiblement la même que celle définie par la partie arrière (5) et est au plus égale à celle définie par la zone intermédiaire (7).

8. Ensemble suivant la revendication 6 ou 7, caractérisé en ce que son extrémité avant comporte un clapet anti-retour (3), notamment à bille (23).

9. Ensemble suivant l'une quelconque des revendications 6 à 8, caractérisé en ce que ledit passage est défini par un unique conduit rectiligne (14) s'étendant suivant l'axe (X-X) dudit ensemble (1), ce conduit communiquant avec l'espace qui entoure la zone intermédiaire (7) de la vis (1) par l'intermédiaire d'une série d'orifices (15) convergents vers l'avant.

10. Ensemble suivant l'une quelconque des revendications 6 à 9, caractérisé en ce que ladite partie avant (6) est extérieurement cylindrique et de diamètre extérieur inférieur au diamètre intérieur du fourreau (26), et comporte une portée en saillie (4, 12) près de chacune de ses extrémités.

11. Presse d'injection de charges successives de matière plastique à mouler, comprenant un fourreau (26) muni dans sa partie arrière d'une alimentation unique en matière plastique, et un ensemble à vis sans fin (1) suivant l'une quelconque des revendications 6 à 10 monté rotatif et coulissant dans ce fourreau, ladite alimentation unique (32) débouchant au droit de ladite partie arrière (5) dudit ensemble (1).

12. Presse d'injection suivant la revendication 11, caractérisée en ce que l'extrémité avant du fourreau (26) comporte un alésage de sortie (35) qui peut être obturé ou ouvert.

## Claims

1. Procedure for injecting successive charges of plastic moulding material, of the type in which, by means of a screw assembly (1) comprising a threaded rear part (5) connected by an intermediary zone (7) to a front part (6) in which at least one internal rectilinear conduit (14) is defined, this assembly turning and sliding in a sheath (26) fitted with heating means (33), and defining an injection chamber (47) at the front of the screw assembly, each charge of plastic material to be injected is brought forward, by compressing it and homogenising its temperature by rotating the screw and it is introduced into the injection chamber (47), the accumulation of plastic material in the injection chamber bringing about the progressive withdrawal of the screw assembly, the injection chamber then being put into communication with a mould, the procedure comprising the following stages:
the intermediary zone (7) is given a reduced section;
the plastic material is supplied uniquely to the right of the rear threaded part (5);
firstly the charge is brought forward by means of this rear threaded part (5) to the said intermediary zone (7) with the reduced section, then,
the charge penetrates the space surrounding this area up to the said rectilinear conduit (14) defined in the front part (6) of the said assembly (1).

2. Procedure according to claim 1, characterised by the fact that a virtually constant passage section is kept in the rear part (5) and in the front part (6) of the said assembly (1), the passage section in the intermediary zone (7) being at least equal to the section which is virtually constant and the screw assembly being brought forward to transfer the charge into the mould.

3. Procedure according to claim 1 or 2 characterised by the fact that the axial length of the rectilinear conduit (14) is considerably greater than that of the intermediary zone (7).

4. Procedure according to claim 1 or 3, characterised by the fact that the threaded part (5) and the rectilinear conduit (14) are virtually the same length.

5. Claim according to any of claims 1 to 4, characterised by the fact that each charge comprises a mix of plastic materials with different colours and hardnesses and/or long fibres.

6. Screw assembly to inject successive charges of plastic moulding material destined to turn and slide in a sheath (26), of the type comprising a rear threaded part (5) which only extends to the intermediary zone (7) of the length of the said assembly, the front part (6) of this assembly defining a passage formed by at least one internal rectilinear conduit (14) and which communicates by means of its front extremity with the space surrounding the said intermediary zone, the said intermediary zone (7) having a reduced section.

7. Assembly according to claim 6, characterised by the fact that the passage of the front part (6) is virtually the same as the passage of the rear part (6) and is at most equal to that defined by the intermediary zone (7).

8. Assembly according to claim 6 or 7 characterised by the fact that its front extremity comprises an anti-return valve (3), notably a ball valve (23).

9. Assembly according to any of claims 6 to 8, characterised by the fact that the said passage is defined by a unique rectilinear conduit (14) which extends following the axis (X-X) of the said assembly (1), this conduit communicating with the space surrounding the intermediary zone (7) of the screw (1) by the intermediary of a series of orifices (15) which converge towards the front.

10. Assembly according to one of any of claims 6 to 9, characterised by the fact that the said front part (6) is externally cylindrical and with an external diameter which is less than the inner diameter of the sheath (26), and comprises a projecting bearing (4, 12) near each of its extremities.

11. Press for injecting successive charges of plastic moulding material comprising sheath (26) supplied, at its rear part, with a unique supply of plastic material, and a screw assembly (1) according to any of claims 6 to 10 assembled in a rotary manner and sliding in this sheath, the said unique supply (32) opening out to the right of the said rear part (5) of the said assembly (1).

12. Injection press according to claim 11 characterised by the fact that the front extremity of the sheath (26) comprises outlet bore (35) which can be sealed or open.

## Patentansprüche

1. Spritzgußverfahren für aufeinanderfolgende Kunststoffladungen, bei dem jede einzuspritzende Kunststoffladung mittels einer Schneckenanordnung (1), die einen hinteren Gewindeteil (5) umfaßt, der über einen Mittelbereich (7) mit einem Vorderteil (6) verbunden ist, in dem zumindest ein geradliniger Innenkanal (14) definiert ist, wobei sich diese Anordnung dreht und in einem Schaft (26) gleitet, der mit Aufheizmittel (33) ausgestattet ist und der vor der Schneckenanordnung eine Einspritzkammer (47) definiert, weiterbefördert wird, wobei sie durch Drehung der Schnecke zusammengedrückt und ihre Temperatur homogenisiert wird, und in eine Einspritzkammer (47) eingebracht wird, wobei die Ansammlung des Kunststoffmaterials in der Einspritzkammer ein fortschreitendes Zurückgehen der Schneckenanordnung hervorruft, die Einspritzkammer in der Folge mit einer Gußform in Verbindung gebracht wird, und die Schneckenanordnung vorwärts bewegt wird, um die Ladung in die Gießform zu überführen, wobei das Verfahren die folgenden Schritte umfaßt:
- im Mittelbereich (7) wird ein verringerter Querschnitt vorgesehen;
- das Kunststoffmaterial wird nur rechtwinklig zum hinteren Gewindeteil (5) eingespeist;
- zuerst wird die Ladung mittels dieses hinteren Gewindeteils (5) bis zum Mittelbereich (7) mit verringertem Querschnitt weitergetrieben, sodann
- wird die Ladung des Raumes, der diesen Bereich umgibt, bis in den geradlinigen Kanal (14) gedrückt, der in dem Vorderteil (6) der Anordnung (1) definiert ist.

2. Verfahren nach Anspruch 1, **dadurch gekennzeichnet**, daß der Querschnitt des Durchlasses in dem hinteren Teil (5) und in dem vorderen Teil (6) der Anordnung (1) ungefähr konstant beibehalten wird, wobei der Querschnitt des Durchlasses in dem Mittelbereich (7) mindestens gleich dem ungefähr konstanten Querschnitt ist.

3. Verfahren nach den Ansprüchen 1 oder 2, **dadurch gekennzeichnet,** daß die Länge in Achsrichtung des geradlinigen Kanals (14) beträchtlich größer als die des Mittelbereichs (7) ist.

4. Verfahren nach den Ansprüchen 1 oder 3, **dadurch gekennzeichnet,** daß der Gewindeteil (5) und der geradlinige Kanal (14) ungefähr dieselbe Länge aufweisen.

5. Verfahren nach irgendeinem der Ansprüche 1 bis 4, **dadurch gekennzeichnet,** daß jede Ladung eine Kunststoffmaterialmischung aus verschiedenen Farben und Härten und/oder lange Fasern umfaßt.

6. Schneckenanordnung zum Spritzgießen von aufeinanderfolgenden Kunststoffladungen, die dazu bestimmt ist, sich zu drehen und in einem Schaft (26) zu gleiten, und derart ausgeführt ist, daß sie einen hinteren Gewindeteil (5) umfaßt, der sich nur bis zu einem Mittelbereich (7) von der Länge der Anordnung erstreckt, wobei der vordere Teil (6) dieser Anordnung einen Durchlaß definiert, der durch zumindest einen geradlinigen Innenkanal (14) gebildet wird und der mit seinem stromaufwärts gelegenen Endteil mit dem Raum in Verbindung steht, der den Mittelbereich umgibt, wobei der Mittelbereich (7) einen verringerten Querschnitt aufweist.

7. Anordnung nach Anspruch 6, **dadurch gekennzeichnet,** daß der Querschnitt des Durchlasses des vorderen Teils (6) im wesentlichen derselbe ist wie der, der durch den hinteren Teil (5) definiert ist, und der höchstens gleich dem ist, der durch den Mittelbereich (7) definiert ist.

8. Anordnung nach den Ansprüchen 6 oder 7, **dadurch gekennzeichnet,** daß sein vorderer Endteil ein Rückschlagventil (3), insbesondere ein Kugelventil (23) umfaßt.

9. Anordnung nach irgendeinem der Ansprüche 6 bis 8, **dadurch gekennzeichnet,** daß der Durchlaß durch einen einzelnen geradlinigen Kanal (14) definiert ist, der sich entlang der Achse (X-X) der Anordnung (1) erstreckt, wobei dieser Kanal mit dem Raum, der den Mittelbereich (7) der Schnecke (1) umgibt, vermittels einer Reihe von Öffnungen (15), die nach vorne zusammenlaufen, in Verbindung steht.

10. Anordnung nach irgendeinem der Ansprüche 6 bis 9, **dadurch gekennzeichnet,** daß der vordere Teil (6) außen zylindrisch ist und einen Außendurchmesser aufweist, der kleiner ist als der Innendurchmesser des Schafts (26), und in der Nähe jedes seiner Endteile eine vorstehende Auflagefläche (4, 12) umfaßt.

11. Spritzgußpresse für aufeinanderfolgende Kunststoffladungen, die einen Schaft (26) umfaßt, der an seinem hinteren Teil mit einer einzigen Kunststoffmaterialversorgung ausgestattet ist, und der eine Schneckenanordnung (1) nach irgendeinem der Ansprüche 6 bis 10 umfaßt, die drehbar und gleitend in diesem Schaft angebracht ist, wobei die einzige Versorgung (32) rechtwinkling zum hinteren Teil (5) der Anordnung (1) mündet.

12. Spritzgusspresse nach Anspruch 11, **dadurch gekennzeichnet,** daß der vordere Endteil des Schaftes (26) eine Austrittsbohrung(35) umfaßt, die verschlossen oder geöffnet sein kann.
